# EUROPÄISCHE PATENTSCHRIFT

(11) **EP 1 964 966 B1**
(45) Veröffentlichungstag und Bekanntmachung des Hinweises auf die Patenterteilung: **29.12.2010**
(21) Anmeldenummer: 08151866.4
(22) Anmeldetag: 25.02.2008
(51) Int. Cl.: D06N 3/00, D06N 7/00, D06M 11/83, A01N 59/16

(54) **Antimikrobielles textiles Glasfasermaterial**
Antimicrobial textile fibreglass material
Matériau textile en fibres de verre antimicrobien

(30) Priorität: 26.02.2007 DE 102007009619
(43) Veröffentlichungstag der Anmeldung: 03.09.2008
(73) Patentinhaber: Vitrulan Textilglas GmbH, 95509 Marktschorgast (DE); Fraunhofer-Gesellschaft zur Förderung der angewandten Forschung e.V., 80686 München (DE)
(72) Erfinder: Zapf Gunnar, 95326, Kulmbach (DE); Schmid Helmut, 72250, Freudenstadt (DE)
(74) Vertreter: Gille Hrabal Struck Neidlein Prop Roos

(56) Entgegenhaltungen:
- WO-A-2005/094161
- DD-A1- 133 692
- DATABASE WPI Week 200676 Derwent Publications Ltd., London, GB; AN 2006-738901 XP002485153 & KR 2006 006 709 A (YANG W D) 19. Januar 2006 (2006-01-19)
- DATABASE WPI Week 200465 Derwent Publications Ltd., London, GB; AN 2004-665745 XP002485154 & KR 2004 000 637 A (NANO ENC CO LTD) 7. Januar 2004 (2004-01-07)
- DATABASE WPI Week 200765 Derwent Publications Ltd., London, GB; AN 2007-697340 XP002485155 & KR 2007 014 506 A (CLUSTER INSTR CO LTD) 1. Februar 2007 (2007-02-01)
- DATABASE WPI Week 199624 Derwent Publications Ltd., London, GB; AN 1996-236620 XP002485156 & JP 08 092878 A (DAINIPPON PRINTING CO LTD) 9. April 1996 (1996-04-09)

## Beschreibung

Die vorliegende Erfindung betrifft ein textiles Glasfasermaterial mit einer antimikrobiellen Ausrüstung, ein Verfahren zu dessen Herstellung sowie dessen Verwendung insbesondere als dekoratives Glasfasergewebe oder Armierungsgewebe.

Textilhalb- und Textilfertigfabrikate aus Glasfasern finden aufgrund deren Eigenschaftsspektrums heutzutage umfangreich Anwendung. So sind beispielsweise Materialien aus Glasfasern wasserfest, hygienisch, pflegeleicht und stehen in vielen interessanten Strukturen zur Wahl. Glasfasermaterialien haben darüber hinaus den Vorteil, dass durch die hohe Zugfestigkeit der Glasfasermaterialien auch Risse beispielsweise bei Glasfasergeweben für Wandverkleidungen überbrückt werden können, Glasfaser-Wandbedeckungen bieten ferner eine Feuerbeständigkeit, eine leichte und unkomplizierte Handhabung sowie Flexibilität bei ihrer Verwendung. Sie zeigen auch eine gute Abriebsfestigkeit und ein gutes Aussehen nach dem Streichen. Daher sind Glasfasertapeten besonders für beanspruchte Bereiche wie zum Beispiel Eingangsbereiche, Treppenhäuser, Flure, Sanitärbereiche, Krankenhäuser, Arztpraxen, Kaufhäuser, Aufenthaltsräume usw. geeignet.

Um eine leichte Handhabung von textilen Glasfasermaterialien beispielsweise als Wandabdeckung (z.B. Tapete) zu erreichen, wird das Glasfasermaterial oftmals mit einer Formulierung auf Wasserbasis imprägniert, welche hauptsächlich Stärke, Cellulose, Bindemittel und ein anorganisches Vernetzungsmittel enthält. Mit Hilfe dieser Imprägnierung auf Basis von Stärke oder Cellulose ist die Klebefähigkeit der Wandbedeckung wasseraktivierbar und der Endverbraucher kann durch Befeuchten des Glasfasermaterials dieses klebrig machen. Eine zusätzliche Verwendung von beispielsweise Tapetenkleister ist in diesem Fall nicht erforderlich.

GB-A-1184563 offenbart eine vorab mit einem Klebstoff versehene Vliesstoff-Wandbedeckung aus Glasfasern mit zwei verschiedenen Beschichtungen auf beiden Oberflächen und einem Stärkeklebstoff.

DD 133 692 betrifft eine abwaschbare Tapete, bestehend aus einem Trägermaterial wie Zellstoff- oder Duplexpapier oder Glasseidenmischgewebe, das einseitig mit einem wasseraktivierbaren Cellulosederivat als Klebebeschichtung versehen ist.

EP-A-0 909 850 beschreibt eine Wandendbedeckung mit einem mehrfarbigen Druck und einer Rückseite aus Haftklebstoff.

EP-A-1 162 306 beschreibt ein Verfahren zur Herstellung eines klebstoffbeschichteten Glasgewebe-Wandbelags, bei dem man
(a) ein Glasgewebe zur Verfügung stellt,
(b) erste getrocknete Beschichtungen auf beiden Seiten des Glasgewebes bildet, die ausgehend von einer wässrigen Dispersion, aufweisend Stärke und ein polymeres Latexbindemittel, aufgetragen werden und
(c) als nächstes eine zweite getrocknete Beschichtung auf der ersten getrockneten Beschichtung nur auf einer Seite des Glasgewebes bildet, die aus einer stärkehaltigen Zusammensetzung besteht, wobei die zweite Beschichtung in der Lage ist, als Klebstoff zur Befestigung des resultierenden Wandbelags an der Wand zu dienen, wenn diese mit Wasser benetzt wird.

Nachteilig an den verwendeten Glasfasergeweben ist jedoch deren mikrobielle Anfälligkeit, insbesondere durch die Verwendung von wasseraktivierbaren Klebstoffimprägnierungen auf dem Glasfasergewebe. So liegt dem in diesen Imprägnierungen üblicherweise benutzten wässrigen oder durch Wasser aktivierbaren Klebstoff hauptsächlich eine Stärke- oder Celluloselösung zugrunde. Dieses Stärke- oder Cellulose enthaltende wässrige System stellt ein potentielles Angriffsobjekt für Mikroorganismen wie beispielsweise Schimmelpilze dar, für welche es ein hervorragender Nährboden ist. Insbesondere bei dem Aufkleben von Glasfasergeweben auf eine Wand unter Verwendung von wasseraktivierbaren Klebstoffen auf Stärke- oder Cellulosebasis besteht dann die Gefahr einer mikrobiellen Kontamination, wenn das Glasfasergewebe mit einer dichten, das Gewebe flächig verschließenden Grundbeschichtung versehen ist.

Um entsprechende Glasfasermaterialien antimikrobiell auszustatten, ist es im Allgemeinen erforderlich, das Glasfasermaterial mit einem antimikrobiellen Wirkstoff beispielsweise in den einzelnen Beschichtungen, welche auf den Glasfasermaterialien vorgesehen sind, zu versehen. Eine Vielzahl von hierfür in Frage kommenden organischen Bioziden sind aus ökologischen Gründen, insbesondere wenn mit den Glasfasermaterialien bestimmte ÖKOTEX-Standards erreicht werden sollen, ungeeignet.

Damit ergibt sich für die vorliegende Erfindung als eine erste Aufgabe, ein textiles Glasfasermaterial bereitzustellen, welches eine ökologisch verträgliche antimikrobielle Ausstattung aufweist. Gleichzeitig sollte das resultierende Glasfasermaterial für den Anwender leicht zu verarbeiten sein und daher vorzugsweise mit einer wasseraktivierbaren Klebstoffbeschichtung versehen sein.

Aus der DE 10 2005 889 A1 ist ferner ein Verfahren zur antimikrobiellen Ausrüstung von textilen Flächengebilden mit Silber bekannt. Dabei erfolgt die Herstellung der Ausrüstung ausgehend von einer wässrigen Flotte, welche das elementare Silber enthält. Das elementare Silber wird durch Reduktion eines Silbersalzes hergestellt, wodurch die auszurüstenden Gegenstände auch mit einem Reduktionsmittel kontaminiert werden.

Eine weitere Aufgabe der vorliegenden Erfindung ist demnach, ein textiles Glasfasermaterial mit antimikrobleiler Ausrüstung bereitzustellen, welches keine Kontamination beispielsweise von Rückständen von Reduktionsmitteln aufweist.

Ferner sollen die antimikrobiellen Ausrüstungen vorzugsweise keine Verfärbung der textilen Glasfasermateriallen bewirken, Hierfür wird eine antimikrobielle Beschichtung angestrebt, die so effizient ist, dass nur eine geringe Menge an antimikrobieller Beschichtung erforderlich ist.

Gelöst wird diese Aufgabe durch ein textiles Glasfasermaterial, umfassend ein aus Glasfasern aufgebautes Trägermaterial, mindestens eine auf dem Trägermaterial aufgebrachte Grundbeschichtung und/oder Klebeschicht und/oder antimikrobielle Beschichtung.

Das erfindungsgemäße textile Glasfasermaterial ist dann **dadurch gekennzeichnet, dass** das Glasfasermaterial nanopartikuläres Silber und mindestens einen weiteren antimikrobiell wirkenden Bestandteil, ausgewählt aus der Gruppe der nicht humantoxischen Wirkstoffen, bestehend aus Zinkoxid, Chitosan und Chitosan-Derivaten, umfasst. Das nanopartikuläre Silber kann dabei in der Grundbeschichtung, der Klebebeschichtung und/oder der antimikrobiellen Beschichtung (im folgenden auch als separate antimikrobielle Beschichtung bezeichnet) auf dem Glasfasermaterial vorliegen.

Besonders bevorzugt ist die Verwendung von nanopartikulärem Silber in der Grundbeschichtung und der Klebebeschichtung.

Erfindungsgemäß ist somit ein textiles Glastosermaterial vorgesehen, welches eine mit nanopartikulärem Silber versehene Beschichtung aufweist und wobei das nanopartikuläre Silber eine antimikrobielle Wirksamkeit erfüllt. Im Rahmen der vorliegenden Erfindung wird unter dem Begriff der "antimikrobiellen Wirksamkeit" eine biozide bzw. biostatische Wirkung gegen Bakterien, Pilze, Algen, Hefen, Viren etc. verstanden, das heißt, dass die antimikrobielle Ausstattung in der Lage ist, auf chemischem oder biologischem Weg Schadorganismen zu zerstören, abzuschrecken, unschädlich zu machen, Schädigung durch sie zu verhindern oder sie in anderer Weise zu bekämpfen (Definition aus dem deutschen Biozidgesetz aus dem Jahr 2000).

Durch die Verwendung von nanopartikulärem Silber in den Beschichtungen des Glasfasermaterials lässt sich ein Glasfasermaterial bereitstellen, welches mit einer hervorragenden antimikrobiellen Ausstattung versehen ist und gleichzeitig ökologisch verträglich ist. Derartig ausgestattete Glasfasermaterialien haben das Potential, insbesondere den Standard Okö-Tex 100 (Produktklasse 1) zu erfüllen. Der Öko-Tex Standard 100 ist ein Prüf- und Zertifizierungssystem für Textilien. Es wird von der "Internationalen Gemeinschaft für Forschung und Prüfung auf dem Gebiet der Textilökologie" (Öko-Tex) vergeben und zeigt, dass die entsprechend gekennzeichneten Etikett versehenen Textilprodukte Grenzwerte für bestimmte gesundheitsgefährdende Schadstoffe einhalten. Die Textilien werden beispielsweise auf pH-Wert, Formaldehyd, Pestizide und Herbizide, extrahierbare Schwermetalle, chlororganische Carrier und Konservierungsmittel wie Pentachlorphenol und Tetrachlorphenol getestet. Außerdem werden die Textilien auf krebserregende MAK-Amine spezieller Azofarbstoffe untersucht, deren Einsatz in Europa zum Teil gesetzlich verboten ist, sowie auf weitere Zusatzstoffe (wie antimikrobiell wirkende Bestandteile), deren allergisierend wirkendes Potenzial wissenschaftlich belegt ist. Das Zertifizierungssystem ist in vier Produktklassen eingeteilt:
- I - Babyartikel
- II - Artikel mit lang andauerndem oder großflächigem Hautkontakt
- III - Oberbekleidung
- IV - Ausstattungsmaterialien,
wobei das erfindungsgemäße Glasfasermaterial vorzugsweise der Produktklasse I (Babyartikel) entspricht.

Im Rahmen der vorliegenden Erfindung wird unter dem Begriff "nanopartikuläres Silber" elementares Silber in nanopartikulärer Form, Silberoxid in nanopartikulärer Form sowie Mischungen von elementarem Silber in nanopartikulärer Form und Silberoxid in nanopartikulärer Form verstanden. Hinsichtlich der Spezifikationen der einzelnen nanopartikulären Silberteilchen wird auf die Ausführungen weiter unten verwiesen.

### Textiles Glasfasermaterial:

Die Art des erfindungsgemäßen textilen Glasfasermaterials unterliegt im Rahmen der vorliegenden Erfindung keiner Beschränkung und es kann ausgewählt sein aus der Gruppe, bestehend aus Glasfasergeweben, Glasfaservliesen, Glasfasergewirken und Glasfaserstricken.

Vorzugsweise ist das erfindungsgemäße textile Glasfasermaterial ein gewobenes Produkt (Glasfasergewebe), das Glasfasergarn umfasst. Die Webart ist typischerweise ein einfaches Webmuster mit variabler Anzahl an Webschäften. Das Gewebe kann auf einer Vielzahl von Vorrichtungen hergestellt werden. Hinsichtlich dem Eintrag des Schussfadens sind zum Beispiel Greiferwebstühle oder Luftstrahl-Webmaschinen zu nennen, während hinsichtlich der Art der Bindungsmustererzeugung Schaftwebmaschinen oder Jacquard-Webmaschinen zu nennen sind.

Die vorliegende Erfindung ist auch auf Glosfaservliesstoffe anwendbar, wie zum Beispiel Mattenprodukt. Diese können zum Beispiel nach herkömmlichen Verfahren der Nassablagerung, wie beispielsweise in den U.S.-Patenten Nr. 4,112,147; 4,681,802 und 4,810,576 beschriebenen, hergestellt werden.

Bei dem textilen Glasfasermaterial kann es sich um ein textiles Glasfasermaterial handeln, welches aus E-Glas (E=Electric, gilt als Standardfaser), S-Glas (S=Strength, Faser mit erhöhter Festigkeit), R-Glas (R=Resistance, Faser mit erhöhter Festigkeit), M-Glas (M=Modulus, Faser mit erhöhter Steifigkeit (E-Modul)), C-Glas (C=Corrosion, Faser mit erhöhter Chemikalienbeständigkeit), ECR-Glas (E-Glass Corrosion Resistant, Faser mit besonders hoher Korrosionsbestöndigkeit), D-Glas (D=Dielectric, Faser mit niedrigem dielektrischen Verlustfaktor), AR-Glas (AR=Alkaline Resistant, für die Anwendung in Beton entwickelte Faser, die mit Zirkonium angereichert ist; sie ist gegenüber einer basischen Umgebung weitgehend resistent) und Hohlglasfasern (Fasern (meist E-Glas) mit einem Hohlquerschnitt) ausgewählt ist. Dem Fachmann sind diese Glasfasern an sich bekannt.

Im Rahmen der vorliegenden Erfindung ist die Verwendung von E-und/oder C-Glas besonders bevorzugt.

Darüber hinaus kann das Glas-Gittergewebe oder Glasdekogewebe jedoch neben den Glasfasermaterialien auch andere Fasern, wie z.B. Polyester-, Kevlar- oder Carbonfasern, enthalten.

Das textile Glasfasermaterial weist mindestens eine auf dem Trägermaterial aufgebrachte Grundbeschichtung und/oder Klebeschicht auf.

In einer ersten Ausgestaltung der vorliegenden Erfindung weist das textile Glasfasermaterial nur eine Grundbeschichtung auf.

In einer zweiten Ausgestaltung der vorliegenden Erfindung weist das textile Glasfasermaterial nur eine Klebebeschichtung auf.

In einer dritten Ausgestaltung der vorliegenden Erfindung weist das textile Glasfasermaterial auf einer Seite des Glasfasermaterials eine Grundbeschichtung und auf der Grundbeschichtung eine Klebebeschichtung auf.

In einer vierten Ausgestaltung der vorliegenden Erfindung weist das textile Glasfasermaterial eine Grundbeschichtung und auf der der Grundbeschichtung gegenüberliegenden Seite eine Klebebeschichtung auf.

In einer fünften Ausgestaltung der vorliegenden Erfindung weist das textile Glasfasermaterial auf jeder Seite des Glasfasermaterials eine Grundbeschichtung auf.

In einer sechsten Ausgestaltung der vorliegenden Erfindung weist das textile Glasfasermaterial auf jeder Seite eine Grundbeschichtung und auf einer der Grundbeschichtungen eine Klebebeschichtung auf.

Die sechste Ausgestaltung des erfindungsgemäßen Glasfasermaterials ist besonders bevorzugt.

Falls zwei Grundbeschichtungen auf unterschiedlichen Seiten des aus Glasfasern aufgebauten Trägermaterials vorgesehenen sind, können diese Grundbeschichtungen eine unterschiedliche oder die gleiche Zusammensetzung aufweisen.

Das erfindungsgemäße Wirkstoffsystem aus nanopartikulärem Silber kann gleichzeitig jeweils in nur einer der oben beschriebenen Beschichtungen, in zwei der oben beschriebenen Beschichtungen oder aber in allen oben beschrieben Beschichtungen enthalten sein. Alternativ kann das Wirkstoffsystem aus nanopartikulärem Silber auch einer separaten Beschichtung auf dem erfindungsgemäßen textilen Glasfasermaterial vorliegen.

Bei Verwendung von zwei Grundbeschichtungen auf unterschiedlichen Seiten des Glasfasermaterials kann das nanopartikuläre Silber in nur einer der beiden Grundbeschichtungen oder aber in beiden Grundbeschichtungen enthalten sein, was bevorzugt ist.

Das erfindungsgemäß vorgesehene textile Glasfasermaterial weist ein Flächengewicht von im Allgemeinen 50 bis 400 g/m², besonders bevorzugt 60 bis 350 g/m², insbesondere 70 bis 300 g/m², speziell 80 bis 230 g/m², auf,

### Grundbeschichtungen:

Das erfindungsgemäß vorgesehene textile Glasfasermaterial kann mindestens eine Grundbeschichtung aufweisen.

Diese Grundbeschichtung umfasst vorzugsweise ein Bindemittelsystem. Das Bindemittelsystem wird insbesondere zur Erzeugung der Nassfestigkeit des resultierenden Glasfasermaterials verwendet und erzeugt vorzugsweise eine geschlossene Beschichtung des aus Glasfasern aufgebauten Trägermaterials.

Es ist besonders bevorzugt, dass es sich dabei um wässrige Bindemittelsysteme handelt, welche frei von organischen Lösemitteln sind.

Geeignete Bindemittel für die Grundbeschichtung werden im Allgemein derart ausgewählt, dass sie eine geringe Hydrophilie aufweisen, also nicht viel Wasser aufnehmen.

Geeignete Bindemittel können ohne Einschränkung verwendet werden, und es kann beispielsweise auf die in Römpp-Lexikon Lacke und Druckfarben genannten Bindemittel verwiesen werden; vgl, hierzu "Römpp-Lexikon Lacke und Druckfarben", Georg Thieme Verlag 1998, Seite 73 und 74, Stichwort: "Bindemittel".

In der Grundbeschichtung des erfindungsgemäßen textilen Glasfasermaterials können auch mehrere der nachfolgend beschrieben Bindemittelsysteme, beispielsweise zwei, drei oder vier der nachfolgend beschriebenen Bindemittelsysteme, enthalten sein.

Das Bindemittelsystem ist in einer ersten Ausführungsform vorzugsweise ausgewählt aus Polymeren, insbesondere auch Copolymeren, welche ausgehend von vinylhaltigen, insbesondere styrolhaltigen, acrylathaltigen, methacrylathaltigen, phenylacrylathaltigen, ethylen- und butadienhaltigen sowie vinylacetathaltigen, urethanhaltigen, esterhaltigen Monomeren erhalten werden.

Weitere bevorzugte Bindemittel werden darüber hinaus aus Alkydharzen, Acrylharzen, Aminoplaste, wie Melamin-Formaldehydharze, Epoxidharzen, Epoxidharzester, chlorierten Polyethylenharzen, Phenol-Formaldehydharzen, Chlorkautschuk, Cyclokautschuk, Silicon-Polymeren, gesättigten oder ungesättigten Polyestern, Harnstoff-Formaldehydharzen und/oder Polyharnstoffen ausgewählt.

Als Beispiele können demnach Polyvinylacrylat, Polyvinylacetet, Ethylen-Polyvinylacetat-Copolymerisate, Polypropylen, Polystyrol, Polytetrafluorethylen, Polyurethan, Polyvinylbutyral, Polyvinylchlorid, chloriertes Polyvinylchlorid, Polyvinylidenfluorid und Polystyrol-Polyolefin-Elastomere.

Besonders bevorzugt sind Ethylen-Polyvinylacetat-Copolymerisate und Copolymere auf der Basis von Polystyrol.

Die vorgenannten organischen Bindemittel können - je nach Anwendungsgebiet der erfindungsgemäßen Zusammensetzung - allein oder in Kombination mit anorganischen Bindemitteln verwendet werden.

Anorganische Bindemittel werden beispielsweise ausgewählt aus Kalk, Weißzement und Kaliwasserglas, wobei letzteres bevorzugt ist. Kalk kommt beispielsweise in Form von Calciumhydroxid, als Sumpfkalk etc. zum Einsatz, Weißzement in Pulverform und Kaliwasserglas als wässrige Lösung von Kaliumsilicat. Die Verwendung von organischen Bindemitteln alleine, d.h. ohne zusätzliches anorganisches Bindemittel, ist jedoch bevorzugt.

Die erfindungsgemäße Zusammensetzung kann weiterhin mindestens ein Vernetzungsmittel für die oben genannten Bindemittel enthalten.

Vernetzungsmittel sind Mittel, welche hinsichtlich bestimmter funktioneller Gruppen, die hauptsächlich an dem polymeren Bindemittel vorhanden sind, reaktionsfähig sind. Vernetzungsmittel werden vorzugsweise in einer Konzentration von 3 bis 12 % auf Trockenbasis verwendet, um wichtige Eigenschaften wie Filmbildung, Hydrophobizität, Nassfestigkeit zu verbessern. Diese reaktionsfähigen Mittel können entweder organische oder anorganische Arten sein, z.B. solche auf Basis von Zirkon, Harnstoff/Formaldehyd oder Glyoxalderivate. Bevorzugt werden Zirkonvernetzungsmittel.

In der Grundbeschichtung des erfindungsgemäßen Glasfasermaterials kann darüber hinaus Stärke als filmbildendes Mittel verwendet werden.

Bei der in der Grundbeschichtung verwendeten Stärke kann es sich um native oder modifizierte Stärke handeln.

Native Stärke ist chemisch nicht modifizierte Stärke, zum Beispiel Mais-, Weizen- oder Kartoffelstärke.

Modifizierte Stärken sind chemisch veränderte Stärken, welche erhöhten technischen Anforderungen gerecht werden. Diese Stärken werden eingesetzt, um folgende Probleme bei der Anwendung von nativer Stärke zu umgehen:
- Hitzestabilität
- Löseverhalten
- Scherstabilität
- Nassstabilisierung

Zur Herstellung von modifizierter Stärke werden, je nachdem, welche Eigenschaften verändert werden sollen, verschiedenen chemischen Umwandlungsprozessen an nativer Stärke vorgenommen. Bei einigen modifizierten Stärken werden mehrere Umwandlungsprozesse nacheinander durchgeführt (z.B. acetylierte oxidierte Stärke):
- Säure behandelte Stärke durch Reaktion mit Säuren (z.B. mit Salzsäure, Phosphorsäure oder Schwefelsäure)
- Alkalisch modifizierte Stärke durch Reaktion mit Laugen (z.B. mit Natronlauge oder Kalilauge)
- Gebleichte Stärke durch Behandlung mit Peroxyessigsäure, Wasserstoffperoxid, Natriumhypochlorit, Natriumchlorit, Schwefeldioxid, Sulfiten, Kaliumpermanganat oder Ammoniumpersulfat
- Enzymatisch modifizierte Stärke durch Behandlung mit Amylasen
- Oxidierte Stärke durch Oxidation (z.B. mit Natriumhypochlorit)
- Monostärkephosphat durch Veresterung mit phosphorigen Estergruppen (z.B. Phosphorsäure, Natrium- oder Kaliumphosphat, Phosphonsäure oder Pentanatriumtriphosphat)
- Distärkephosphat durch Veresterung mit Natriumtrimetaphosphat oder Phosphoroxychlorid
- Phosphatiertes Distärkephosphat durch Kombination der Verfahren zur Herstellung von Monostärkephosphat und Distärkephosphat
- acetylierte Stärke durch Veresterung (z.B. mit Anhydriden)
- Hydroxypropylstärke durch Reaktion mit Propylenoxid.

Im Rahmen der vorliegenden Erfindung kann jede wie oben beschrieben modifizierte Stärke verwendet werden.

Insbesondere kann es sich bei der modifizierten Stärke oder ein Stärkederivat aus der Gruppe, bestehend aus β- oder γ-Cyclodextrin, rückgebildeter und/oder degradierter Stärke, hydrophober Stärke, Amylose, Stärke-diethylaminoethylether und Stärke-2-hydroxyethylether handeln.

Wenn Stärke oder ein Stärkederivat in der Grundbeschichtung verwendet wird, so ist festzustellen, dass dieses Material zwar ein sehr guter Filmbildner ist, jedoch aufgrund seiner Hydrophilie nicht nassstabil und naturgemäß einem mikrobiellen Angriff zugänglich ist, weshalb es im Rahmen der vorliegenden Erfindung bevorzugt ist, die Grundbeschichtung mit einer entsprechende antimikrobiellen Ausrüstung auszustatten.

In der Grundbeschichtung des erfindungsgemäßen Glasfasermaterials kann darüber hinaus auch ein Verdicker verwendet werden. Hierbei handelt es sich in einer bevorzugten Ausführungsform um Cellulose oder Cellulosederivate.

Wenn in der erfindungsgemäßen Grundbeschichtung ein Cellulosederivat verwendet wird, so ist dieses vorzugsweise ausgewählt aus der Gruppe, bestehend aus Methylcellulose, Hydroxypropylmethylcellulose, Hydroxypropylcellulose, Natrium-Carboxymethylcellulose, Hydroxyethylcellulose und Hydroxypropylethylcellulose,

Die Grundbeschichtung kann darüber hinaus zusätzlich mindestens eine Komponente aufweisen, die ausgewählt ist aus der Gruppe, bestehend aus mindestens einem Pigment, mindestens einem Füllstoff, mindestens ein Dispergierhilfsmittel, mindestens ein Entschäumer, mindestens ein Stabilisator und mindestens einem Additiv zur Verbesserung der Prozessgängigkeit umfasst. Beispiele derartiger Bestandteile sind dem Fachmann an sich bekannt.

Durch die Verwendung entsprechender Pigmente kann das erfindungsgemäße Glasfasermaterial weiß pigmentiert oder gefärbt werden. Als besonders geeignetes Pigment ist Titandioxid zu nennen.

Beispiele geeigneter Füllstoffe sind anorganische oder organische Füllstoffe, wie Carbonate, z,B. Calciumcarbonat; Sulfate, z.B, Calciumsulfat; Silikate, z.B. Talk, Quarz; Kieselsäure, z.B. Glaskugeln, Glasfasern; Mikrohohlkugeln; Organische Füllstoffe, z.B. organische Mikrohohlkugeln, Polymerfasern, Cellulosefasern.

Die Auftragsmenge der Grundbeschichtung kann in weiten Bereichen variiert werden. Sie beträgt im Allgemeinen 10 bis 200 g/m², insbesondere 15 bis 175 g/m², insbesondere 20 bis 150 g/m², speziell 25 bis 125 g/m², jeweils berechnet als Trockengewicht, auf dem textilen Glasfasermaterial.

Der Feststoffgehalt der erfindungsgemäß vorgesehenen Grundbeschichtung beträgt im Allgemeinen 6 bis 60 %, insbesondere 8 bis 55 %, insbesondere 10 bis 50 %, speziell 10 bis 45 %.

Bei der Verwendung von zwei textilen Glasfasermaterialien auf gegenüberliegenden Seiten des Trägermaterials kann es sich um zwei Grundbeschichtungen handeln, die in ihrer Zusammensetzung identisch oder verschieden sind. Besonders bevorzugt ist jedoch, wenn die beiden Grundbeschichtungen die gleiche Zusammensetzungen aufweisen.

### Klebebeschichtung:

Das erfindungsgemäß vorgesehene textile Glasfasermaterial kann mindestens eine Klebebeschichtung aufweisen. Bei der Klebebeschichtung handelt es sich vorzugsweise um einen Dispersionkleber.

Die Verwendung einer Klebebeschichtung auf dem erfindungsgemäßen Glasfasermaterial ist von Vorteil, da dass stets die richtige Menge an Klebebeschichtung vorhanden auf den Materialien ist und eine große Zeitersparnis für den Endverbraucher erzielt wird, da die Tapeten leicht verarbeitet werden können, in dem sie einfach angefeuchtet werden (bzw. Indem sie durch ein Wassertauchbad gezogen werden). Aus diesem Grund sollte die Klebebeschichtung eine relativ hohe Hydrophilie aufweisen, da sie bei der Verarbeitung Wasser rasch aufnehmen muss und dieses Wasser auch zurückhalten sollte. Hierdurch wird die Auswahl geeigneter Komponenten der Klebeschicht bedingt.

In einer Ausgestaltung des erfindungsgemäßen Glasfasermaterials umfasst die Klebebeschichtung somit vorzugsweise einen wässrigen Dispersionkleber, welcher frei von organischen Lösemitteln ist.

Die Klebebeschichtung ist dabei vorzugsweise wasseraktivierbar. Daher eignet sich beispielsweise Stärke, Cellulose bzw. ein Cellulosederivat als hydophile Bestandteile der Klebebeschichtung. Diese Materialien dienen dazu, dass die Klebeschicht möglichst schnell Wasser aufnimmt (Wasseraktivierbarkeit), Diese Materialien erfüllen nach Wasseraufnahme auch eine Klebefunktion.

Hinsichtlich der Stärkekomponente kann auf obige Ausführungen hinsichtlich der Grundbeschichtung verwiesen werden.

In einer bevorzugten Ausführungsform enthält die erfindungsgemäß vorgesehene Klebebeschichtung Stärke und Cellulose bzw. Cellulosederivate.

Insbesondere kann die vorhandene Stärkekomponente von irgendeiner Quelle abgeleitet sein, welche in gelatinierter, befeuchteter Form zu einer guten Klebrigkeit führt. Beispielsweise können Kartoffel-, Mais-, Weizenstärke oder deren Kombinationen benutzt werden. Eine Kombination von Kartoffel- und Maisstärke wird am meisten bevorzugt. Bei der in der Klebebeschichtung verwendeten Stärke kann es sich um native Stärke, die oben beschriebenen modifizierten Stärken oder ein Stärkederivat aus der Gruppe, bestehend aus β- oder γ-Cyclodextrin, rückgebildeter und/oder degradierter Stärke, hydrophober Stärke, Amylose, Stärke-diethylaminoethylether und Stärke-2-hydroxyethylether handeln.

Wenn ein Cellulosederivat in der Klebebeschichtung verwendet wird, so wird dieses vorzugsweise ausgewählt aus der Gruppe, bestehend aus Methylcellulose, Hydroxypropylmethylcellulose, Hydroxypropylcellulose, Natrium-Carboxymethylcellulose, Hydroxyethylcellulose und Hydroxypropylethylcellulose,

Der Dispersionskleber, welcher in der Klebebeschichtung erfindungsgemäß verwendet wird, umfasst darüber hinaus im Allgemeinen ein Bindemittelsystem, da die Klebeschicht sonst zu spröde wird, und sie beispielsweise beim Aufrollen der Tapete abplatzen würde. Die polymeren Dispersionskleberanteile sorgen für die Flexibilität der Beschichtung.

Geeignete Bindemittel können ohne Einschränkung verwendet werden, und es kann beispielsweise auf die in Römpp-Lexikon Lacke und Druckfarben genannten Bindemittel verwiesen werden; vgl. hierzu "Römpp-Lexikon Lacke und Druckfarben", Georg Thieme Verlag 1998, Seite 73 und 74, Stichwort: "Bindemittel".

In der Klebebeschichtung des erfindungsgemäßen textilen Glasfasermaterials können auch mehrere der nachfolgend beschrieben Bindemittelsysteme, beispielsweise zwei, drei oder vier der nachfolgend beschriebenen Bindemittelsysteme, enthalten sein.

Das Bindemittelsystem ist in einer ersten Ausführungsform vorzugsweise ausgewählt aus Polymeren, insbesondere auch Copolymeren, welche ausgehend von vinylhaltigen, insbesondere styrolhaltigen, acrylathaltigen, methacrylathaltigen, phenylacrylathaltigen, ethylen- und butadienhaltigen sowie vinylocetathaltigen, urethanhaltigen, esterhaltigen Monomeren erhalten werden.

Weitere bevorzugte Bindemittel werden darüber hinaus aus Alkydharzen, Acrylharzen, Aminoplaste, wie Melamin-Formaldehydharze, Epoxidharzen, Epoxidharzester, chlorierten Polyethylenharzen, Phenol-Formaldehydharzen, Chlorkautschuk, Cyclokautschuk, Silicon-Polymeren, gesättigten oder ungesättigten Polyestern, Harnstoff-Formaldehydharzen und/oder Polyharnstoffen ausgewählt.

Als Beispiele können demnach Polyvinylacrylat, Polyvinylacetet, Ethylen-Polyvinylacetat-Copolymerisate, Polypropylen, Polystyrol, Polytetrafluorethylen, Polyurethan, Polyvinylbutyral, Polyvinylchlorid, chloriertes Polyvinylchlorid, Polyvinylidenfluoris und Polystyrol-Polyolefin-Elastomere.

Die vorgenannten organischen Bindemittel können - je nach Anwendungsgebiet der erfindungsgemäßen Zusammensetzung - allein oder in Kombination mit anorganischen Bindemitteln verwendet werden.

Die Klebebeschichtung ist durch die Verwendung von nativer oder modifizierter Stärke oder Cellulose bzw. Cellulosederivaten vorzugsweise wasseraktivierbar. Das heißt, dass der Verbraucher die Klebebeschichtung der textilen Glosfaserbeschichtung mit Wasser in Kontakt bringt und somit die klebenden Eigenschaften der Klebebeschichtung aktiviert. Damit das erfindungsgemäße textile Glasfasermaterial befriedigend arbeitet, ist es wichtig, dass die in der Klebebeschichtung verwendete Stärkeformulierung auf die Oberfläche aufgebrachtes Wasser schnell absorbiert.

Eine antimikrobielle Ausstattung der Klebebeschichtung ist von Vorteil, da die in dieser Klebebeschichtung verwendeten Bestandteile, insbesondere Stärke und Cellulose, ein hervorragender Nährböden für Bakterien und Schimmelpilze sind, sodass vorzugsweise die Klebebeschichtung die antimikrobielle Ausstattung aufweist,

Hinzu kommt, dass die Klebeschicht auch die Verbindungsschicht zur Wand darstellt, aus der unter Umständen Feuchtigkeit in das Glasfasermaterial gelangen kann, sodass auch aus diesem Grund eine besonders wirksame antimikrobielle Ausrüstung der Klebeschicht erfolgen sollte. Weiterhin hat sich in der Praxis herausgestellt, dass die Verarbeiter von entsprechenden Glasfasermaterialien das Wasser, das zum Anfeuchten der Klebebeschichtung dient, weiches in einer entsprechenden Apparatur vorgehalten wird, nicht regelmäßig austauschen, sodass es bereits beim Auftrag von Wasser auf der Klebebeschichtung zu einer Kontaminierungen durch Bakterien oder Pilzsporen des Materials kommen kann.

Die Klebebeschichtung wird in einer Auftragsmenge von im Allgemeinen 5 bis 100 g/m², insbesondere 10 bis 125 g/m², insbesondere 15 bis 100 g/m², speziell 15 bis 70 g/m², jeweils berechnet als Trockengewicht, auf dem textilen Glasfasermaterial verwendet.

Der Feststoffgehalt der erfindungsgemäß vorgesehenen Klebebeschichtung beträgt im Allgemeinen 10 bis 40 %, insbesondere 12 bis 35 %, insbesondere 14 bis 30 %, speziell 16 bis 28 %.

### Antimikrobielles Wirkstoffsystem:

In einer ersten Ausführungsform ist erfindungsgemäß vorgesehen, dass ein antimikrobielles Wirkstoffsystem aus nanopartikulärem Silber in der Grundbeschichtung und/oder Klebebeschichtung vorgesehen ist.

Die antimikrobielle Ausstattung wird durch nanopartikuläres Silber erreicht, d.h. dass die Partikel des Silbers, welches in der Grundbeschichtung oder der Klebebeschichtung enthalten ist, eine mittlere Korngröße von weniger als 500 nm, bevorzugter weniger als 100 nm, noch bevorzugter weniger als 50 nm aufweisen. Besonders wirksam ist eine mittlere Partikelgröße von 5 bis 50 nm.

In weiteren Ausgestaltungen des erfindungsgemäß vorgesehenen antimikrobiellen Wirkstoffsystems beträgt die mittlere Korngröße des verwendeten nanopartikulären Silbers 5 bis 30 nm, besonders bevorzugt 6 bis 25 nm, insbesondere 7 bis 20 nm, speziell 8 bis 16 nm, noch spezieller 10 bis 14 nm, noch weiter spezieller 11 bis 13 nm. Für Markierungszwecke kann eine weitere Korngrößenüberrepräsentation oder -unterrepräsentation erfolgen.

Die Partikelgröße wird dabei durch Photonenkorrelationsspektroskopie bestimmt.

Die erfindungsgemäß vorgesehene Teilchengröße des nanopartikulären Silbers ist insbesondere deshalb bevorzugt, da hierdurch eine große Oberfläche zur Verfügung gestellt wird, über welche das nanopartikuläre Silber wirkt.

Durch die Verwendung des nanopartikulären Silbers in den erfindungsgemäß vorgesehenen Beschichtungen wird, bezogen auf den Silbergehalt, eine unerwartet hohe biozide Wirkung erzielt, so dass die Menge des verwendeten Silbers aufgrund von Kostenersparnis und negativen Sekundäreffekten, wie beispielsweise Farbveränderungen, gering bleiben kann.

Die nanopartikulären Silberpartikel können beliebige Formen annehmen. Bevorzugt ist allerdings, wenn die nanopartikulären Silberpartikel sphärisch, besonders bevorzugt kugelförmig, ausgebildet sind. Diese Form ermöglicht eine erleichterte Einarbeitung der Komponente in die Zusammensetzung.

Die Herstellung von nanopartikulärem Silber ist an sich bekannt, und geeignetes nanopartikuläres Silber kann kommerziell beispielsweise vom Fraunhofer Institut für Chemische Technologie, Deutschland erhalten werden,

Vorzugsweise weist das nanopartikuläre Silber keine Rückstände von Reduktionsmitteln auf, wie sie beispielsweise bei der gemäß DE 10 2005 020 889 A1 beschriebenen Vorgehensweise auftreten.

Ferner ist es bevorzugt, dass das nanopartikuläre Silber keine Rückstände aus Abrieben von Materialien aufweist, welche durch das Verkleinern von Silbermaterialien beispielsweise durch Mahlvorgänge entstehen (z.B, ZrO₂- oder Y-Oxid-Rückstände). Derartige Rückstände entstehen insbesondere bei Anwendung der so genannten Top-Down-Synthesen.

Wenn das nanopartikuläre Silber in der Grundbeschichtung verwendet wird, beträgt dessen Gehalt in der Grundbeschichtung vorzugsweise 0,1 bis 50 ppm, besonders bevorzugt 0,2 bis 30 ppm, insbesondere 0,3 bis 20 ppm, speziell 0,4 bis 10 ppm, jeweils bezogen auf das Gewicht der Grundbeschichtung.

Wenn das nanopartikuläre Silber in der Klebebeschichtung verwendet wird, beträgt dessen Gehalt in der Klebebeschichtung vorzugsweise 0,1 bis 50 ppm, besonders bevorzugt 0,2 bis 40 ppm, insbesondere 0,3 bis 30 ppm, speziell 0,4 bis 20 ppm, jeweils bezogen auf das Gewicht der Klebebeschichtung.

Wenn das nanopartikuläre Silber in der separaten antimikrobiellen Beschichtung verwendet wird, beträgt dessen Gehalt in der separaten antimikrobiellen Beschichtung vorzugsweise 0,1 bis 50 ppm, besonders bevorzugt 0,2 bis 40 ppm, insbesondere 0,3 bis 30 ppm, speziell 0,4 bis 20 ppm, jeweils bezogen auf das Gewicht der separaten antimikrobiellen Beschichtung.

Die vorliegende Erfindung betrifft darüber hinaus in einer zweiten Ausführungsform eine separate Beschichtung, enthaltend nanopartikuläres Silber. In dieser Ausführungsform kann das textile Glasfasermaterial gegebenenfalls zusätzlich die oben beschriebene Grundbeschichtung und/oder Klebebeschichtung aufweisen, wobei nanopartikuläres Silber in diesen Grundbeschichtungen bzw. Klebebeschichtungen zusätzlich enthalten oder aber nicht enthalten sein kann.

Wenn eine zusätzliche Beschichtung, in welcher nanopartikuläres Silber enthalten ist, neben der der Grundbeschichtung oder der Klebebeschichtung vorgesehen ist, so ist dieses nanopartikuläre Silber vorzugsweise in einer Polymermatrix eingebettet. Als Polymermatrix kommen alle diejenigen Bindemittelsysteme in Frage, welche als Bindemittel auch in der Grundbeschichtung oder der Klebebeschichtungen verwendet werden.

In einer dritten Ausführungsform liegt das antimikrobielle Wirkstoffsystem aus nanopartikulärem Silber mindestens in einer der Grundbeschichtung oder der Klebstoffbeschichtung als auch in einer zusätzlichen separaten Beschichtung vor.

Darüber hinaus ist es bevorzugt, wenn neben dem nanopartikulären Silber in der Grundbeschichtung, der Klebebeschichtung und/oder der separaten antimikrobiellen Beschichtung zusätzlich Silberoxide, vorzugsweise Ag₂O, oder Silberhydroxide enthalten sind.

Wenn Silberoxid in der Grundbeschichtung vorgesehen ist, so beträgt die Menge an Silberoxid in der Grundbeschichtung vorzugsweise 1 bis 100 ppm, besonders bevorzugt 2 bis 60 ppm, insbesondere 3 bis 40 ppm, bezogen auf die Grundbeschichtung, beträgt.

Wenn Silberoxid in der Klebebeschichtung vorgesehen ist, so beträgt die Menge an Silberoxid in der Klebebeschichtung vorzugsweise 5 bis 250 ppm, besonders bevorzugt 10 bis 200 ppm, insbesondere 15 bis 150 ppm, bezogen auf die Klebebeschichtung, beträgt.

Wenn Silberoxid in der separaten antimikrobiellen Beschichtung vorgesehen ist, so beträgt die Menge an Silberoxid in der antimikrobiellen Beschichtung vorzugsweise 5 bis 250 ppm, besonders bevorzugt 10 bis 200 ppm, insbesondere 15 bis 150 ppm, bezogen auf die antimikrobiellen Beschichtung, beträgt.

Das textile Glasfasermaterial kann in der Grundbeschichtung, der Klebebeschichtung oder der separaten antimikrobiellen Beschichtung darüber hinaus weitere antimikrobielle Wirkstoffe enthalten. Je nach gewähltem antimikrobiellen Zusatzwirkstoff können jedoch die angestrebten Öko-Tex-Standards nicht erreicht werden. Nichts desto trotz umfasst die vorliegende Erfindung auch die Verwendung dieser antimikrobiellen Wirkstoffe neben nanopartikulärem Silber. Diesbezüglich und ohne Vollständigkeit sind insbesondere als nicht-humane toxische Wirkstoffsysteme, welche bevorzugt sind, zu nennen nanopartikuläres Zinkoxid, Chitosan und Chitosanderivaten. Darüber hinaus sind quaternierte Ammoniumverbindungen, quaternierte Fettsäuretriethanolaminestersalze (Esterquats), aromatische Alkohole, N-Octylsalicylsäureamid, N-Decylsalicylsäureamid (gemäß DE 100 18 219 A1) zu nennen. Durch Kombination dieser Komponenten mit dem nanopartikulären Silber wird eine synergistische biozide Wirkung der Zusammensetzung erreicht.

Falls Chitosanderivate verwendet werden, so kann es sich beispielsweise um N,O-Carboxymethylchitosan, Chitosanhydrochlorid, Chitosanacetat und Chitosanlactat handeln. In Ergänzung zur bioziden Wirkung ist für diese Substanzklasse die Absorber-Wirkung auf Grund der Sekundär- bzw. Tertiär-Struktur der Molekülkette hervorzuheben. Es können ein oder mehrere Chitosanderivate in Kombination verwendet werden. Weiterhin können ein oder mehrere Chitosanderivate auch in Kombination mit Chitosan zur Anwendung kommen. Da sich die Chitosan-Derivate insbesondere in ihrer Wasserlöslichkeit sowohl untereinander als auch im Vergleich zum Chitosan unterscheiden, ergeben sich weitere Möglichkeiten die Bioverfügbarkeit, mithin die biozide Wirkung (biozides Wirkungsspektrum und Wirkungsdauer), gezielt einzustellen.

Die erfindungsgemäß verwendeten Beschichtungen können darüber hinaus als weiteren biozid wirkenden Bestandteil ein Metall, das ausgewählt ist aus der Gruppe, bestehend aus Gold, Platin, Palladium, Iridium, Zinn, Kupfer, Antimon und Legierungen und/oder Oxide der vorstehend aufgeführten Metalle, enthalten. Weiter bevorzugt ist, dass diese Metalle, wenn sie in den erfindungsgemäß vorgesehenen Beschichtungen verwendet werden, in kationischer Form, insbesondere in lonentauschern gebunden, in Form eines Komplexes oder als Salz, vorliegen, so dass deren Bioverfügbarkeit durch Einstellen der Löslichkeit gesteuert erfolgen kann.

Auch die zusätzliche Verwendung von Phthalimiden, Acetamiden, Phthalonitrilen, Hydroxybenzoaten, Isothiazolinonen, Nitropropandiolen, Carbamaten, Methylharnstoffen, Benzimidazolen, Salicylanilide, Carbendiazime, Biphenyl, Thiabendazol und ortho-Phenylphenol in den erfindungsgemäßen Beschichtungen ist möglich. Diese organischen Verbindungen weisen ebenfalls biozide Eigenschaften auf.

Durch die Verwendung der zuvor genannten weiteren biozid wirkenden Bestandteilen können mit dem nanopartikulären Silber synergistische Effekte erreicht werden. Dieses ist insbesondere überraschend, da das nanopartikuläre Silber und die anderen biozid wirkenden Bestandteile zum Teil nach anderen Wirkmechanismen arbeiten.

Durch den geringen, erfindungsgemäß vorgesehenen Gehalt an nanopartikulärem Silber bestehen ferner keinerlei Probleme hinsichtlich einer Verfärbung des erfindungsgemäßen Glasfasermaterials.

Schließlich wird auch auf die Verwendung von schwerlöslichen Silbersalzen verzichtet.

Die erfindungsgemäß vorgesehene Grundbeschichtung, Klebebeschichtung bzw. antimikrobielle Beschichtung führt, wenn die Beschichtungen mit dem entsprechenden Wirkstoffsystem aus nanopartikulärem Silber ausgestattet sind, dazu, dass das textile Glasfasermaterial die Fähigkeit besitzt, insbesondere das Wachstum von Bakterien und Pilzen zu hemmen, zu kontrollieren oder zu eliminieren. Insbesondere kann das erfindungsgemäße textile Glasfasermaterial das Wachstum von Bakterien, wie Gram-positiven Bakterien und Gramnegativen Bakterien hemmen bzw. stoppen, wie beispielsweise von Chlamydia trachomatis, Citrobacter, Providencia stuartii, Vibrio vulnificus, Staphylococcus aureas, Staphyloccus epidermidus, Escheria coli, Pseudomonas maltophilia, Serratia marcesens, Bacillus subtilis, Bacillus cloacae, Bacillus allantoides, Bacillus foecalis alkaligenes, Pneumobacillus, Nitrat-negativer Bacillus, Streptococcus facades, Streptococcus hemolyticus B, Salmonella typhinurium, Salmonella paratyphi C, Salmonella morgani, Pseudomonas aeruginosa. Das erfindungsgemäße textile Glasfasermaterial kann ferner auch durch Gehaltseinstellung konzentrationsabhängig das Wachstum von bestimmten höheren Organismen hemmen, wie Algen, Pilze, filamentöse Pilze (Aspergillus, wie Aspergillus niger, Aureobasidium, Botrytis, Candida albicans, Ceratostomella, Chaetomium, Cuvularla, Fusarlum, Gliocladium virens und Penicillium-Arten), Hefen und Sporen.

Das nanopartikuläre Silber wird vorzugsweise in der Form von Stamm-Suspensionen (bzw. einem sogenannten Masterbatch) bereitgestellt, deren Gehalt an nanopartikulärem Silber variieren kann und auch der Gehalt des weiteren gegebenenfalls biozid wirkenden Bestandteils in entsprechender Menge vorliegt, Die für die konkreten Anwendungen erforderlichen, zuvor bereits genannten Konzentrationen werden dann durch Verdünnung dieser Master-Batches erreicht.

Die Vorteile des nanopartikulären Wirkstoffsystems bestehen einerseits darin, dass die einzelnen nanopartikulären Silberteilchen in dem Bindemittel der Grundbeschichtung, der Klebebeschichtung bzw. der separaten nanopartikulären Silberbeschichtung gewissermaßen über Dipol-Dipol-Wechselwirkungen verankert sind, wodurch es vor einer unkontrollierten Freisetzung geschützt wird. Andererseits weisen nanopartikuläre Silberteilchen den Vorteil ihrer geringen, im Nanometerbereich liegenden Größe auf. Hierdurch weisen die Teilchen ein hohes Verhältnis von Oberfläche zu Volumen auf, so dass ein erhöhter Anteil an Oberflächenreaktionen stattfinden kann. Hierdurch lässt sich die zur antimikrobiellen Ausrüstung des erfindungsgemäßen Glasfasermaterials erforderliche Menge an Silber reduzieren. Dieses spielt insbesondere bei Glasfasermaterialien eine Rolle, bei denen möglichst keine Gelbfärbung durch hohe Konzentration an nanopartikulärem Silber auftreten darf (beispielsweise bei dekorativen Glasfasertapeten).

Ohne an eine Erklärung gebunden sein zu wollen, wird davon ausgegangen, dass die antimikrobielle Wirksamkeit des nanopartikulären Silbers durch die Exposition von Silberatomen mit Partialladung an der Oberfläche des Silbers (im Folgenden als Ag^{δ+} bezeichnet) erreicht wird. Daher kommt es nicht nur darauf an, dass freie, gewissermaßen extrahierbare Silberionen vorhanden sind. Die antimikrobielle Wirksamkeit beruht auch darauf, dass die Zellwand an mehrere solcher Ag^{δ+}-Stellen anbindet und dadurch die Zellfunktion beeinträchtigt wird. Derartige Vorgänge können aufgrund der Teilchengröße an nanopartikulärem Silber häufiger auftreten als bei elementarem Silber, welches nicht in nanopartikuklärer Form vorliegt.

Im Fall einer Teiloxidation bilden sich auf den elementaren nanopartikulären Silberteilchen an der Oberfläche in geringer Schichtdicke Silberoxide. Silberoxid selbst vermag daher ebenfalls entsprechende Ag^{δ+}-Stellen an der Oberfläche bereitzustellen. Allerdings liegt ein wesentlicher Unterschied zwischen entsprechenden Silberoxidpartikeln und dem elementarem nanopartikulären Silber in der erreichbaren Teilchengröße. Während elementare nanopartikuläre Silberteilchen verhältnismäßig klein sind, sind die entsprechenden Teilchen aus Silberoxid größer, was zu dem oben beschriebenen erfindungsgemäßen Vorteil führt.

Nichts desto trotz kann im Rahmen der vorliegenden Erfindung auch nanopartikuläres Silberoxid, entweder alleine oder aber in Kombination mit elementarem nanopartikulären Silber, wie bereits zuvor erwähnt, verwendet werden. Insbesondere die Kombination von nanopartikulärem Silber und nanopartikulärem Silberoxid in der Grundbeschichtung, der Klebebeschichtung und/oder der separaten antimikrobiellen Beschichtung ist eine bevorzugte Ausführungsform der vorliegenden Erfindung. Insbesondere durch die Kombination dieser beiden Materialien ist es möglich, eine antimikrobielle Ausstattung zu erzielen, ohne eine farbliche Beeinträchtigung der erfindungsgemäßen Glasfasermaterialien in Kauf zu nehmen.

Wenn Silberoxid in nanopartikulärer Form verwendet wird, beträgt dessen Korngröße vorzugsweise 5 bis 500 nm, insbesondere 10 bis 500 nm, besonders bevorzugt 50 bis 500 nm.

### Herstellungsverfahren:

Die vorliegende Erfindung betrifft darüber hinaus ein Verfahren zur Herstellung des erfindungsgemäßen textilen Glasfasergewebes.

Das erfindungsgemäße Verfahren weist die folgenden Verfahrensschritte auf:
(a) Bereitstellen eines textilen Glasfasergewebes;
(b) gegebenenfalls Auftragen von einer Grundbeschichtung auf mindestens einer der beiden Seiten des textilen Glasfasergewebes;
(c) gegebenenfalls Trocknen der aufgetragenen Grundbeschichtung;
(d) gegebenenfalls Auftragen von einer Klebebeschichtung auf einer Seite der Grundbeschichtung;
(e) gegebenenfalls Trocknen der aufgetragenen Klebebeschichtung;
(f) gegebenenfalls Auftragen von einer antimikrobiellen Beschichtung auf einer Seite des Glasfasermaterials
(g) gegebenenfalls Trocknen der aufgetragenen antimikrobiellen Beschichtung;

Das erfindungsgemäße Verfahren ist dann **dadurch gekennzeichnet, dass** das Glasfasermaterial mindestens eine der genannten Beschichtungen aufweist und in mindestens einer dieser Beschichtung nanopartikuläres Silber umfasst ist.

Die einzelnen Auftragsverfahren der Grundbeschichtung, der Klebebeschichtung und der antimikrobiellen Beschichtung unterliegen keinen besonderen Beschränkungen; entsprechende Verfahren sind dem Fachmann an sich bekannt. Die Beschichtungsverfahren könnend dabei kontinuierlich oder diskontinuierlich durchgeführt werden.

Beispielsweise kann die Auftragung der Beschichtungen durch eine Imprägnierung erfolgen. Zu diesem Zweck wird das vorzugsweise in Rollenform bereitgestellte Glasfasermaterial mit Hilfe von Durchlaufwalzen und herkömmlichen Fördermitteln in ein Imprägnierungsbad eingeführt, um zumindest mit einer der Oberflächen ein Bad der Beschichtungsmasse zu berühren, Natürlich ist auch eine Verfahrensweise der Imprägnierung denkbar, in welcher beide Seiten des Glasfasergewebes mit der Beschichtungsmasse in Kontakt gebracht werden. Anschließend werden die durch den Tauchvorgang aufgezogenen Beschichtungsmassen mittels Walzen abgequetscht. Diese Verfahren werden im Allgemeinen als Foulard-Verfahren bezeichnet.

Alternativ kann beispielsweise ein Abroller die Beschichtungsmassen zu den Oberflächen des Glasgewebes fördern. Auch eine Auftragung der einzelnen Beschichtungen durch ein Rakelverfahren ist von der vorliegenden Erfindung umfasst.

Darüber hinaus können als Walzen zum Aufbringen der Beschichtungen auf dem Glasfasergewebe doppelseitige Siebtrommeln benutzt werden. Die Beschichtungsmassen werden dabei dem Innern der beiden Siebtrommeln zugeführt und sodann durch Berührung mit den Siebtrommeln über ein Siebdruckverfahren auf das Glasgewebe aufgebracht.

Die Imprägnierungsstufe für die Grundbeschichtung fügt dem Glasfasermaterial ein zusätzliches Volumen und eine ausgeprägte Deckfähigkeit zu. Dies führt zu einem vorgestrichenen Material, das lediglich eine einzige Anstrichstufe für den Endverbraucher benötigt. Der zeltaufwändige Zweitanstrich, der üblicherweise für Glasgewebe erforderlich ist, kann entfallen.

Die Klebebeschichtung führt zu einer getrockneten Klebebeschichtung, welche aufgrund der oben beschriebenen Bestandteile vorzugsweise wasseraktivierbar ist.

Die separate antimikrobielle Beschichtung sorgt für eine antimikrobielle Beschichtung, wenn auch ein Zusatz an nanopartikulärem Silber in den übrigen Beschichtungen verzichtet werden soll oder aber eine zusätzliche antimikrobielle Ausstattung vorgesehen ist.

Nach der Imprägnierung mit der jeweiligen Beschichtungsmasse kann das beschichtete textile Glasfasermaterial einem Trocknungsschritt, beispielsweise in einem Trocknungsofen mit dampfbeheizten Zylinder, oder mittels eines Lufttrockners, unterzogen werden. Nach dem optionalen Verfahrensschritt des Trocknens kann das Material in eine gewünschte Breite geschnitten und für die nachfolgenden optionalen weiteren Beschichtungen gesammelt werden. Das Schneiden des Glasfasermaterials erfolgt jedoch vorzugsweise erst nach dem Auftrag der Klebebeschichtung.

Die nachfolgende Anwendungsstufe, bei der beispielsweise die Klebebeschichtung auf eine Grundbeschichtung aufgebracht wird, kann auf kontinuierlicher oder diskontinuierlicher Weise durchgeführt werden. Die Klebebeschichtung kann beispielsweise nur auf einer Seite des textilen Glasfasermaterials erfolgen. Ein derartiges Aufbringen auf lediglich einer Seite erfolgt beispielsweise auf der Oberseite der bereits aufgetragenen Grundbeschichtung. Eine Siebtrommel kann zum nächsten Aufbringen der zweiten Beschichtung auf das Glasgewebe verwendet werden. Die Beschichtungsmasse der Klebebeschichtung kann dabei dem Innern der Siebtrommel zugeführt werden. Die Klebemasse wird auf das Glasmaterial durch Berühren mit der Siebtrommel aufgebracht. Die Klebebeschichtung kann auch einen Abroller aufgebracht werden.

Das beschichtete textile Glasfasermaterial kann auf die gewünschte Länge geschnitten werden.

Das textile Glasfasermaterial kann einen Hinweis umfassen, welcher es dem Endverbraucher ermöglicht, zwischen der Stirnseite und der mit dem Klebstoff vorab versehenen Rückseite der Wandbedeckung zu unterscheiden. Hierbei kann es sich beispielsweise um ein gefärbtes Additiv oder um einen Kreidestrich handeln.

Das resultierende Produkt des erfindungsgemäßen Verfahrens bzw. das oben beschriebene textile Glasfasermaterial wird typischerweise in Rollenform mit entsprechender Länge zum Aufbringen auf eine Wand oder eine andere Innenstruktur dem Endverbraucher bereitgestellt. Nach Zuschneiden der Schichten auf die gewünschte Länge wird lediglich Wasser auf das vorab mit Klebstoff versehene erfindungsgemäße textile Glasfasermaterial aufgesprüht oder anderweitig aufgebracht. Dieses kann beispielsweise durch die in der DE-A-103 01 511 beschriebene Vorrichtung erfolgen. Wenn das erfindungsgemäße textile Glasfasermaterial Wasser ausgesetzt wird, quillt die Klebstoffschicht schnell und wird klebrig. Beim Befestigen des Materials beispielsweise an einer Wand ist somit lediglich Wasser notwendig, was für den Endverbraucher einen wesentlichen Vorteil bietet, Das befeuchtete Gewebe kann an der Wand innerhalb von Minuten befestigt werden, und die gegenüberliegende Oberfläche kann gegebenenfalls nach einem Trocknen unmittelbar danach gestrichen werden, Alle Arten von Farben (wie z.B. Latexfarben), welche für Glasfaser-Standardwandbedeckungen verwendet werden können, können auf das neue Produkt angewandt werden. Um das gewünschte Ergebnis zu erreichen, ist lediglich eine Anstrichstufe notwendig, was zu einer bedeutenden Zeit- und Kostenersparnis führt. Das Produkt besitzt die gleiche Feuerbeständigkeitsbewertung wie Standardglasfasergewebe und zeigt eine überlegene Haftung an der Wand. Darüber hinaus sind die erfindungsgemäßen textilen Glasfasermaterialien antimikrobiell ausgestattet, wobei aufgrund der Wahl eines geeigneten antimikrobiellen Wirksystems, umfassend nanopartikuläres Silber, der ökologische Standard eingehalten werden kann.

Das erfindungsgemäße textile Glasfasermaterial kann als dekorative Glasgewebe oder Armierungsgewebe, insbesondere in Wohnräumen, Eingangsbereichen, Treppenhäusern, Fluren, Sanitärbereichen, an Außenfassaden, in Krankenhäusern, Arztpraxen, Kaufhäusern, Aufenthaltsräumen, Schwimmbädern, Feuchträumen, Operationsräumen, Kindergärten usw. verwendet werden. Auch eine Verwendung in tropischem oder subtropischem Klima ist möglich.

Die vorliegende Erfindung betrifft darüber hinaus die Verwendung von nanopartikulärem Silber, gegebenenfalls in Kombination mit mindestens einem weiteren mikrobiell wirkenden Bestandteil, zur antimikrobiellen Ausstattung von textilen Glasfasermaterialien. In einer Ausgestaltung der erfindungsgemäßen Verwendung wird das nanopartikuläre Silber in einer Grundbeschichtung, einer Klebebeschichtung oder einer separaten antimikrobiellen Beschichtung auf dem textilen Glasfasermaterial verwendet.

## Patentansprüche

1. Textiles Glasfasermaterial, umfassend ein aus Glasfasern aufgebautes Trägermaterial, mindestens eine auf dem Trägermaterial aufgebrachte Grundbeschichtung und/oder Klebeschicht und/oder antimikrobieller Beschichtung, **dadurch gekennzeichnet, dass** das textile Glasfasermaterial nanopartikuläres Silber und mindestens einen weiteren antimikrobiell wirkenden Bestandteil, ausgewählt aus der Gruppe der nicht humantoxischen Wirkstoffe, bestehend aus Zinkoxid, Chitosan und Chitosan-Derivaten, umfasst.

2. Textiles Glasfasermaterial nach Anspruch 1, **dadurch gekennzeichnet, dass** das nanopartikuläre Silber In der Grundbeschichtung und/oder der Klebeschicht und/oder der antimikrobiellen Beschichtung vorgesehen ist.

3. Textiles Glasfasermaterial nach Anspruch 1 oder 2, **dadurch gekennzeichnet, dass** es sich bei der Klebeschicht um einen Dispersionkleber handelt.

4. Textiles Glasfasermaterial nach Anspruch 3, **dadurch gekennzeichnet, dass** es sich um einen wässrigen Dispersionskleber handelt.

5. Textiles Glasfasermaterial nach einem der Ansprüche 1 bis 4, **dadurch gekennzeichnet, dass** das nanopartikuläre Silber eine mittlere Korngröße von weniger als 500 nm aufweist.

6. Textiles Glasfasermaterial nach einem der Ansprüche 1 bis 5, **dadurch gekennzeichnet, dass** die Grundbeschichtung des textilen Glasfasermaterials nanopartikuläres Silber umfasst und die Menge des nanopartikulären Silbers in der Grundbeschichtung 0,1 bis 50 ppm, bezogen auf das Gewicht der Grundbeschichtung, beträgt.

7. Textiles Glasfasermaterial nach einem der Ansprüche 1 bis 6, **dadurch gekennzeichnet, dass** die Klebebeschichtung des textilen Glasfasermaterials nanopartikuläres Silber umfasst und die Menge des nanopartikulären Silbers In der Klebebeschichtung 0,1 bis 50 ppm, bezogen auf das Gewicht der Klebebeschichtung, beträgt.

8. Textiles Glasfasermaterial nach einem der Ansprüche 1 bis 7, **dadurch gekennzeichnet, dass** die antimikrobielle Beschichtung des textilen Glasfasermaterials nanopartikuläres Silber umfasst und die Menge des nanopartikulären Silbers in der antimikrobiellen Beschichtung 0,1 bis 50 ppm, bezogen auf das Gewicht der antimikrobiellen Beschichtung, beträgt.

9. Verfahren zur Herstellung eines textilen Glasfasergewebes gemäß einem der Ansprüche 1 bis 8, **gekennzeichnet durch** die folgenden Verfahrensschritte:
(a) Bereitstellen eines textilen Glasfasergewebes;
(b) gegebenenfalls Auftragen von einer Grundbeschichtung auf mindestens einer der beiden Seiten des textilen Glasfasergewebes;
(c) gegebenenfalls Trocknen der aufgetragenen Grundbeschichtung;
(d) gegebenenfalls Auftragen von einer Klebebeschichtung auf einer Seite der Grundbeschichtung;
(e) gegebenenfalls Trocknen der aufgetragenen Klebebeschichtung;
(f) gegebenenfalls Auftragen von einer antimikrobiellen Beschichtung auf einer Seite des Glasfasermaterials; und
(g) gegebenenfalls Trocknen der aufgetragenen antimikrobiellen Beschichtung,
**dadurch gekennzeichnet, dass** das Glasfasermaterial mindestens eine der genannten Beschichtungen aufweist und in dieser mindestens einen Beschichtung nanopartikuläres Silber und mindestens ein weiterer antimikrobiell wirkender Bestandteil, ausgewählt aus der Gruppe der nicht humantoxischen Wirkstoffe, bestehend aus Zinkoxid, Chitosan und Chitosan-Derivaten umfasst ist.

10. Verwendung von nanopartikulärem Silber In Kombination mit mindestens einem weiteren antimikrobiell wirkenden Bestandteil zur Ausstattung von textilen Glasfasermateriallen.

11. Verwendung des textiles Glasfasermaterials gemäß einem der Ansprüche 1 bis 8 als dekorative Glasgewebe oder Armierungsgewebe, Insbesondere in Wohnräumen, Eingangsbereichen, Treppenhäusern, Fluren, Sanitärbereichen, an Außenfassaden, in Krankenhäusern, Arztpraxen, Kaufhäuser, Aufenthaltsräumen, Schwimmbädern, Feuchträumen, Operationsräumen, Kindergärten und in tropischem oder subtropischem Klima.

## Claims

1. Textile fibreglass material comprising a substrate made of fibreglass, at least one basic coating and/or adhesive layer and/or antimicrobial coating applied on the substrate, **characterized in that** the textile fibreglass material comprises silver nanoparticles and at least one further antimicrobial active substance, selected from the group consisting of non human toxic active ingredients, consisting of zinc oxide, chitosan and chitosan derivates.

2. Textile fibreglass material according to claim 1, **characterized in that** the silver nanoparticles are present in the basic coating and/or in the adhesive layer and/or in the antimicrobial coating.

3. Textile fibreglass material according to claim 1 or 2, **characterized in that** said adhesive layer is a dispersion glue.

4. Textile fibreglass material according to claim 3, **characterized in that** an aqueous dispersion adhesive is used.

5. Textile fibreglass material according to claims 1 to 4, **characterized in that** said silver nanoparticles have an average particle size of less than 500 nm.

6. Textile fibreglass material according to claims 1 to 5, **characterized in that** said basic coating of the textile fibreglass material comprises silver nanoparticles and the amount of said silver nanoparticles in the basic coating is 0.1 to 50 ppm, based on the weight of the basic coating.

7. Textile fibreglass material according to claims 1 to 6, **characterized in that** the adhesive layer of said textile fibreglass material comprises silver nanoparticles and the amount of said silver nanoparticles in the adhesive layer is 0.1 to 50 ppm, based on the weight of the adhesive layer.

8. Textile fibreglass material according to claims 1 to 7, **characterized in that** the antimicrobial layer of the textile fibreglass material comprises silver nanoparticles and the amount of said silver nanoparticles in the antimicrobial layer is 0.1 to 50 ppm, based on the weight of the antimicrobial layer.

9. A method for the manufacture of a textile fibreglass fabric according to anyone of claims 1 to 8, **characterized by** the following process steps:
(a) providing a textile fibreglass fabric;
(b) where appropriate, applying a basic coating on at least one of both surface sides of the textile fibreglass fabric;
(c) where appropriate, drying of the applied basic coating;
(d) where appropriate, applying an adhesive layer on one surface side of the basic layer;
(e) where appropriate, drying of the applied adhesive layer;
(f) where appropriate, applying an antimicrobial layer on one surface side of the fibreglass material; and
(g) where appropriate, drying the applied antimicrobial layer,
**characterized in that** the fibreglass material comprises at least one of the described coating, wherein at least in one of these coatings silver nanoparticles and at least one further antimicrobial active substance, selected from the group consisting of non human toxic substances, consisting of zinc oxide, chitosan and chitosan derivatives, are present.

10. The use of silver nanoparticles in combination with at least one further antimicrobial active substance for providing textile fibreglass materials.

11. The use of the textile fibreglass material according to anyone of claims 1 to 8 as a decorative fibreglass fabric or reinforcement fabric, especially in living rooms, entrance areas, stairways, corridors, sanitary facilities, on sidings, in hospitals, medical practices, department stores, leisure rooms, swimming pools, damp locations, operating rooms, kindergartens and in tropic or subtropic climate.

## Revendications

1. Matériau textile en fibres de verre comprenant un substrat consistant en des fibres de verre, au moins un couche de base appliquée sur le substrat et/ou un couche adhésive et/ou une couche antimicrobielle, **caractérisé par le fait que** le matériau textile en fibres de verre comprend de l'argent nanoparticulaire et au moins un autre composant ayant une action antimicrobielle, sélectionné parmi le groupe des agents actifs non toxiques pour l'homme, consistant en l'oxyde de zinc, le chitosane et les dérivés de chitosane.

2. Matériau textile en fibres de verre selon la revendication 1, **caractérisé par le fait que** l'argent nanoparticulaire est fourni dans la couche de base et/ou dans la couche adhésive et/ou dans la couche antimicrobielle.

3. Matériau textile en fibres de verre selon la revendication 1 ou 2, **caractérisé par le fait que** la couche adhésive est un adhésif à dispersion.

4. Matériau textile en fibres de verre selon la revendication 3, **caractérisé par le fait qu'**il est un adhésif à dispersion aqueuse.

5. Matériau textile en fibres de verre selon les revendications 1 à 4, **caractérisé par le fait que** l'argent nanoparticulaire a une taille de particule moyenne de moins de 500 nm.

6. Matériau textile en fibres de verre selon les revendications 1 à 5, **caractérisé par le fait que** la couche de base du matériau textile en fibres de verre comprend de l'argent nanoparticulaire et la quantité de l'argent nanoparticulaire dans la couche de base est 0,1 à 50 ppm, en relation au poids de la couche de base.

7. Matériau textile en fibres de verre selon l'une des revendications 1 à 6, **caractérisé par le fait que** la couche adhésive du matériau textile en fibres de verre comprend de l'argent nanoparticulaire et la quantité de l'argent nanoparticulaire dans la couche adhésive est 0,1 à 50 ppm, en relation au poids de la couche adhésive.

8. Matériau textile en fibres de verre selon l'une des revendications 1 à 7, **caractérisé par le fait que** la couche antimicrobielle du matériau textile en fibres de verre comprend de l'argent nanoparticulaire et la quantité de l'argent nanoparticulaire dans la couche antimicrobielle est 0,1 à 50 ppm, en relation au poids de la couche antimicrobielle.

9. Procédé pour la fabrication d'un tissu textile en fibres de verre selon l'une des revendications 1 à 8, **caractérisé par** les étapes procédurales suivantes :
(a) en cas échéant fournir un matériau textile en fibres de verre ;
(b) en cas échéant appliquer une couche de base sur au moins l'une des deux côtés du tissu textile en fibres de verre ;
(c) en cas échéant sécher la couche de base appliquée ;
(d) en cas échéant appliquer une couche adhésive sur une côté de la couche de base ;
(e) en cas échéant sécher la couche adhésive appliquée ;
(f) en cas échéant appliquer une couche antimicrobielle sur une côté du matériau en fibres de verre ; et
(g) en cas échéant sécher la couche antimicrobielle appliquée,
**caractérisé par le fait que** le matériau en fibres de verre a au moins une des couches citées au-dessus et cette au moins une couche comprend de l'argent nanoparticulaire et au moins un autre composant ayant une action antimicrobielle, sélectionné parmi le groupe des agents actifs non toxiques pour l'homme, consistant en l'oxyde de zinc, le chitosane et les dérivés de chitosane.

10. Utilisation de l'argent nanoparticulaire en association avec au moins un autre constituant ayant une action antimicrobielle pour munir les matériaux textiles en fibres de verre.

11. Utilisation d'un matériau textile en fibres de verre selon l'une des revendications 1 à 8 en tant qu'un tissu de verre décoratif ou un tissu de ferraillage, en particulier dans les logements, les espaces d'entrée, les cages d'escalier, les corridors, les espaces sanitaires, les hôpitaux, les cabinets médicaux, les grands magasins, les salles de séjour, les piscines, les chambres humides, les salles d'opération, les jardins d'enfants et sous les climats tropicaux ou subtropicaux.
